# EUROPÄISCHE PATENTANMELDUNG

(11) **EP 2 237 383 A2**
(43) Veröffentlichungstag der Anmeldung: **06.10.2010**
(21) Anmeldenummer: 10003060.0
(22) Anmeldetag: 23.03.2010
(51) Int. Cl.: H02B 1/20

(54) **Schaltschrank mit steckverbindbarer Sammelschiene**

(30) Priorität: 03.04.2009 DE 102009016120
(71) Anmelder: ABB AG, 68309 Mannheim (DE)
(72) Erfinder: Wilhelm, Bernd, 77880 Oberasbach (DE)

(57) **Zusammenfassung**

Ein Schaltschrank zur Aufnahme von elektrischen oder elektronischen Komponenten, umfassend mindestens eine stromführende Sammelschiene (8), wobei der Sammelschiene (8) ein Kontaktelement (10, 10') zur Verbindung mit einer weiteren Sammelschiene (9) eines weiteren Schaltschranks zugeordnet ist und wobei das Kontaktelement (10, 10') von einem Längsende (11) der Sammelschiene (8) abragt, ist im Hinblick auf die Aufgabe, einen Schaltschrank anzugeben, dessen Sammelschiene (8) unter geringem Montageaufwand mit der Sammelschiene (9) eines weiteren Schaltschranks zuverlässig und schnell stromführend verbunden werden kann, **dadurch gekennzeichnet, dass** das Kontaktelement (10, 10') Greifmittel (12, 12') zum beidseitigen Umgreifen eines weiteren Längsendes (13) der weiteren Sammelschiene (9) aufweist.

## Beschreibung

Die Erfindung betrifft einen Schaltschrank zur Aufnahme von elektrischen oder elektronischen Komponenten, umfassend mindestens eine stromführende Sammelschiene, wobei der Sammelschiene ein Kontaktelement zur Verbindung mit einer weiteren Sammelschiene eines weiteren Schaltschranks zugeordnet ist und wobei das Kontaktelement von einem Längsende der Sammelschiene abragt. Die Erfindung betrifft des Weiteren eine Sammelschiene zur Verwendung in einem Schaltschrank, umfassend ein Kontaktelement zur Verbindung mit einer weiteren Sammelschiene.

Zur Verbindung zweier Schaltschränke, insbesondere von Niederspannungs-Schaltanlagen, wurde in der DE 195 12 380 C2 vorgeschlagen, an den zu verbindenden Schaltschänken Zentrierhilfen anzubringen. Die Zentrierhilfen können bewirken, dass zu verbindende stromführende Sammelschienen relativ zueinander montagegerecht ausgerichtet werden.

Aus dem Stand der Technik ist bekannt, die zu verbindenden stromführenden Sammelschienen miteinander zu verschrauben. Hierzu werden mit den Sammelschienen CU-Laschen verschraubt. Dabei fungiert je eine CU-Lasche als Verbindungsstück, um je zwei Sammelschienen zweier Schaltschränke stromführend miteinander zu verbinden. Hierbei ist nachteilig, dass relativ viele Einzelteile, nämlich Schrauben, CU-Laschen und Werkzeuge, benötigt werden, um die stromführenden Sammelschienen zu verbinden.

In der DE 32 03 106 C3 ist vorgeschlagen worden, zwei als Hohlleiter ausgebildete Sammelschienen durch Kontaktelemente miteinander zu verbinden, die in die Hohlleiter eingeführt werden. Die offenbarten Kontaktelemente werden im Inneren der beiden Hohlleiter aufgenommen und weisen einen relativ komplexen Aufbau auf. Sie umfassen Bolzen, Konusse und Tellerfedern und sind relativ aufwendig in der Fertigung. Des Weiteren ist deren Einsatz auf Hohlleiter beschränkt.

Der Erfindung liegt daher die Aufgabe zugrunde, einen Schaltschrank anzugeben, dessen Sammelschiene unter geringem Montageaufwand mit der Sammelschiene eines weiteren Schaltschranks zuverlässig und schnell stromführend verbunden werden kann.

Erfindungsgemäß wird die voranstehende Aufgabe durch einen Schaltschrank mit den Merkmalen des Patentanspruchs 1 gelöst.

Danach ist der eingangs genannte Schaltschrank **dadurch gekennzeichnet, dass** das Kontaktelement Greifmittel zum beidseitigen Umgreifen eines weiteren Längsendes der weiteren Sammelschiene aufweist.

Erfindungsgemäß ist zunächst erkannt worden, dass Sammelschienen aufgrund ihrer baulichen Lage im Schaltschrank häufig nur schwer zugänglich sind. Daher sind zeitaufwendige Verschraubungsprozesse zu deren Verbinden notwendig. Erfindungsgemäß ist sodann erkannt worden, dass ein Kontaktelement mit Greifmitteln eine einfache Steckverbindung zweier Sammelschienen erlaubt. Hierbei ist insbesondere erkannt worden, dass die Greifmittel in Ihrem Einsatzgebiet nicht auf Hohlleitersammelschienen beschränkt sind, sondern auch flachprofilartige Sammelschienen problemlos miteinander verbinden können. Die Greifmittel können nämlich Seitenflächen von Sammelschienen problemlos umgreifen. Schließlich ist erkannt worden, dass die Greifmittel verliersicher am Längsende der Sammelschiene des Schaltschranks angebracht werden können. Erfindungsgemäß sind daher keine Werkzeuge notwendig, um eine weitere Sammelschiene anzukoppeln. Ein Verschrauben zweier unzugänglicher Sammelschienen ist nicht notwendig, vielmehr können diese einfach durch Aneinanderschieben zweier Schaltschränke steckverbunden werden. Insoweit ist bei geringem Montageaufwand eine rasche und zuverlässige Verbindung zweier Sammelschienen möglich. Folglich ist die genannte Aufgabe gelöst.

Die Greifmittel könnten als Gabelzungen ausgebildet sein und einen Aufnahmeraum ausbilden, wobei sich mindestens zwei Gabelzungen zur Aufnahme des weiteren Längsendes in dem Aufnahmeraum gegenüberliegen. Durch diese konkrete Ausgestaltung kann das Längsende der weiteren Sammelschiene bis zu einem Anschlag in den Aufnahmeraum eingeschoben werden. Die Greifmittel führen dabei vorteilhaft die weitere Sammelschiene und verhindern ein laterales Auswandern der weiteren Sammelschiene.

Die Greifmittel könnten derart geformt sein, dass sie den Aufnahmeraum bereichsweise verjüngen. Durch diese konkrete Ausgestaltung können die Greifmittel unter elastischer Spannung an den Seitenflächen der in den Aufnahmeraum eingeschobenen weiteren Sammelschiene klammerartig anliegen. Vor diesem Hintergrund ist konkret denkbar, dass die Greifmittel eine gekrümmte Form aufweisen oder zumindest bereichsweise gebogen sind. Die Krümmung oder Biegung erzeugt die Verjüngung im Aufnahmeraum. Beim Einschieben der weiteren Sammelschiene werden die Greifmittel im Bereich ihrer Krümmung oder Biegung elastisch deformiert und liegen daher unter mechanischer Spannung an der weiteren Sammelschiene an.

Die Greifmittel könnten zumindest bereichsweise parallel zur Längsachse der Sammelschiene orientiert sein. Hierdurch können die Sammelschienen derart miteinander verbunden werden, dass sie im verbundenen Zustand miteinander fluchten. Ein Überlapp oder Seitenversatz der Sammelschienen wird vermieden.

Als Kontaktelement könnte ein Lyrakontakt verwendet werden. Lyrakontakte sind kommerziell problemlos erhältlich und sind technisch ausgereift.

Überraschend hat sich gezeigt, dass Lyrakontakte eine ausreichende mechanische Stabilität aufweisen, um einem Verbindungsprozess der Sammelschienen Stand zu halten. Des Weiteren reichen die elektrischen Kontaktflächen des Lyrakontakts überraschend aus, um die Sammelschienen zuverlässig stromführend miteinander zu verbinden.

Der Lyrakontakt könnte eine Bodenplatte aufweisen, von der die Greifmittel abragen, wobei die Bodenplatte mit der Endfläche der Sammelschiene verbunden ist. Die Bodenplatte bildet hierbei für die weitere Sammelschiene vorteilhaft einen Anschlag aus. Die Bodenplatte könnte mit der Endfläche verschraubt oder verschweisst sein. Hierdurch ist eine verliersichere Verbindung des Lyrakontakts mit der Sammelschiene realisiert.

Als Kontaktelement könnte ein Leistungsschalterkontakt verwendet werden. Üblicherweise werden Leistungsschalterkontakte verwendet, um Leistungsschalter an Sammelschienen in einem Schaltschrank zu befestigen. Leistungsschalter sind spezielle Schalter, die für hohe Ströme ausgelegt sind. Sie können Betriebsströme und sehr hohe Kurzschlussströme schalten.

Überraschend hat sich aber gezeigt, dass Leistungsschalterkontakte auch zur Verbindung zweier Sammelschienen geeignet sind. Vorteilhaft sind Leistungsschalterkontakte nämlich ausreichend stabil, um einem Steckprozess Stand zu halten, während dem eine Sammelschiene in den Leistungsschalterkontakt eingeführt wird.

Die Greifmittel des Leistungsschalterkontakts könnten auf den Seitenflächen der Sammelschiene befestigt sein. Hierdurch ist eine verliersichere Verbindung des Leistungsschalterkontakts mit der Sammelschiene gegeben. Die Greifmittel könnten vor diesem Hintergrund mit den Seitenflächen verschraubt oder verschweisst sein.

Die Sammelschiene könnte als Hauptsammelschiene ausgestaltet sein. Hierdurch können zwei Schaltschränke vorteilhaft auf einfache Weise modulartig miteinander verbunden werden, indem nämlich allein deren Hauptsammelschienen stromführend miteinander verbunden werden.

Vor diesem Hintergrund könnte eine Anordnung einen erfindungsgemäßen Schaltschrank und einen weiteren Schaltschrank umfassen, wobei deren Sammelschienen durch ein Kontaktelement miteinander stromführend verbunden sind.

Die eingangs genannte Aufgabe wird auch durch eine Sammelschiene zur Verwendung in einem hier beschriebenen Schaltschrank gelöst. Diese umfasst ein Kontaktelement zur Verbindung mit einer weiteren Sammelschiene, wobei das Kontaktelement Greifmittel zum beidseitigen Umgreifen eines Längsendes der weiteren Sammelschiene aufweist.

Um Wiederholungen in Bezug auf die erfinderische Tätigkeit zu vermeiden, sei auf die Ausführungen zum Schaltschrank als solchem verwiesen.

Die Sammelschienen der hier beschriebenen Schaltschränke könnten einerseits stromführend und andererseits kraftschlüssig oder formschlüssig miteinander verbunden sein. Hierdurch ist nicht nur eine elektrisch leitende Verbindung, sondern auch eine hinreichend verschiebefeste mechanische Verbindung der Sammelschienen gewährleistet.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: eine Darstellung zweier Schaltschränke nach dem Stand der Technik,
- Fig. 2: eine perspektivische Ansicht zweier getrennter Sammelschienen, wobei einer ein Lyrakontakt zugeordnet ist,
- Fig. 3: eine perspektivische Ansicht der Sammelschienen gemäß Fig. 2 in verbundenem Zustand,
- Fig. 4: eine perspektivische Ansicht zweier getrennter Sammelschienen, wobei einer ein Leistungsschalterkontakt zugeordnet ist, und
- Fig. 5: eine perspektivische Ansicht der Sammelschienen gemäß Fig. 4 in verbundenem Zustand.

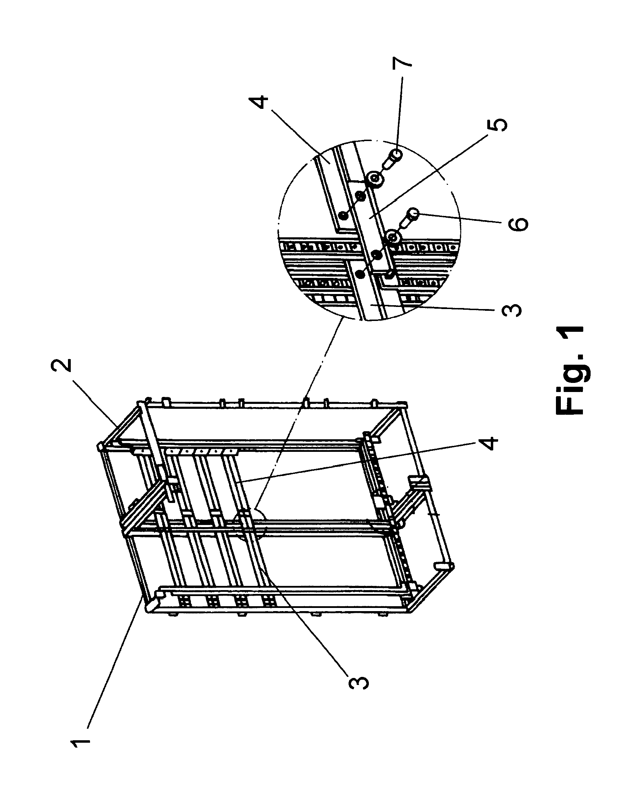

Fig. 1 zeigt zwei Schaltschränke 1, 2 des Stands der Technik, welche modulartig aneinander gekoppelt sind. Die Schaltschränke 1, 2 weisen jeweils ihnen zugeordnete stromführende Sammelschienen 3, 4 auf.

Rechts in Fig. 1 zeigt eine vergrößerte Darstellung schematisch, wie die Sammelschiene 3 mit der Sammelschiene 4 durch eine CU-Lasche 5 stromführend verschraubt wird. Die CU-Lasche 5 wird mittels Schrauben 6, 7 mit den Sammelschienen 3, 4 verschraubt. Dabei liegt die CU-Lasche 5 überlappend auf den Sammelschienen 3, 4 auf.

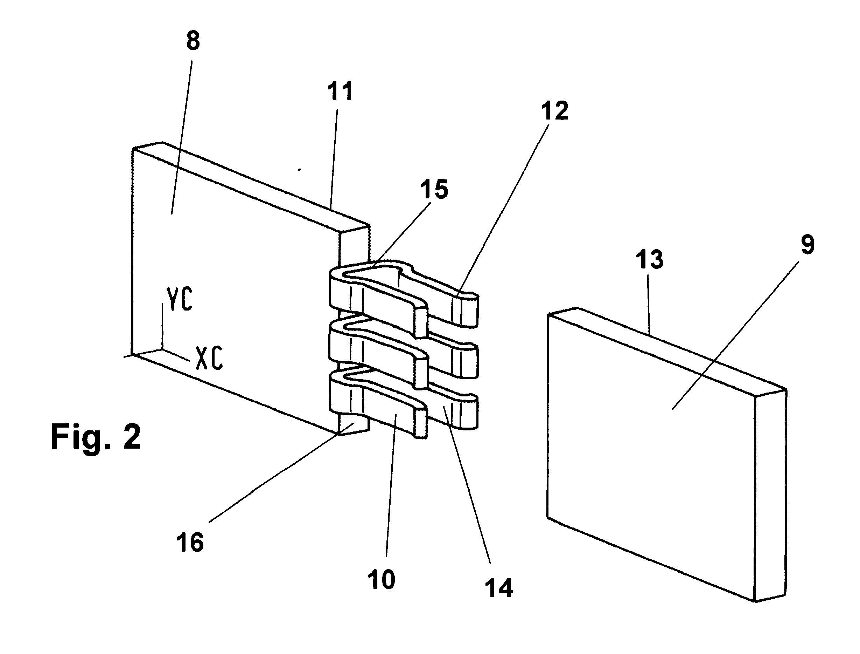

Fig. 2 zeigt eine perspektivische Ansicht zweier getrennter flachprofilartiger Sammelschienen 8, 9, wobei der Sammelschiene 8 als Kontaktelement 10 ein Lyrakontakt zugeordnet ist. Die Sammelschiene 8 gemäß Fig. 2 ist in einem nicht gezeigten Schaltschrank zur Aufnahme von elektrischen oder elektronischen Komponenten aufgenommen. Die Sammelschiene 8 ist stromführend, wobei der Sammelschiene 8 das Kontaktelement 10 zur Verbindung mit der weiteren stromführenden Sammelschiene 9 eines weiteren - ebenfalls nicht gezeigten - Schaltschranks zugeordnet ist. Das Kontaktelement 10 ragt von einem Längsende 11 der Sammelschiene 8 ab. Das Kontaktelement 10 weist Greifmittel 12 zum beidseitigen Umgreifen eines weiteren Längsendes 13 der weiteren Sammelschiene 9 auf. Die Greifmittel 12 erlauben eine einfache Steckverbindung der zwei Sammelschienen 8, 9.

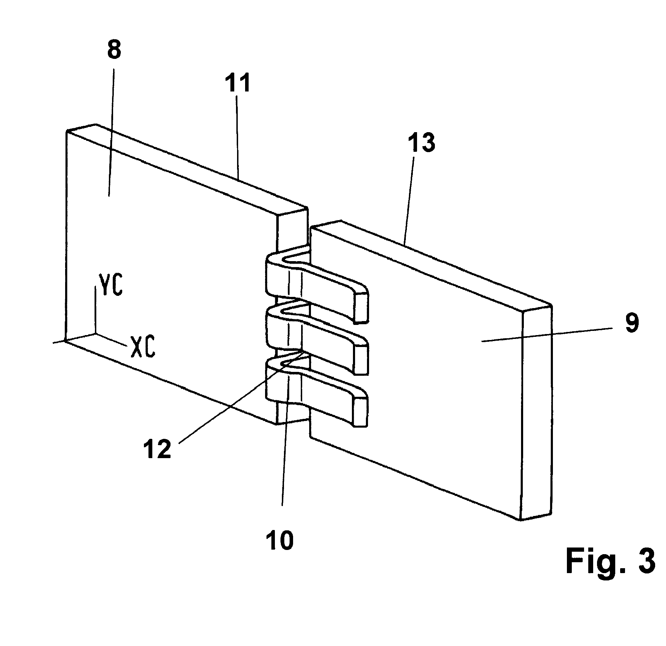

Die Greifmittel 12 sind als Gabelzungen ausgebildet und bilden einen Aufnahmeraum 14 aus, wobei sich mindestens zwei Gabelzungen zur Aufnahme des weiteren Längsendes 13 in dem Aufnahmeraum 14 gegenüberliegen. Durch diese konkrete Ausgestaltung kann das Längsende 13 der weiteren Sammelschiene 9 bis zu einem Anschlag in den Aufnahmeraum 14 eingeschoben werden, wie dies in Fig. 3 gezeigt ist. Konkret sind auf jeder Seite des Längsendes 13 drei Gabelzungen angelegt.

Die Greifmittel 12 sind derart geformt, dass sie den Aufnahmeraum 14 bereichsweise verjüngen. Durch diese konkrete Ausgestaltung liegen die Greifmittel 12 unter elastischer Spannung an den Seitenflächen der in den Aufnahmeraum 14 eingeschobenen weiteren Sammelschiene 9 an. Dies ist in Fig. 3 gezeigt.

Das als Lyrakontakt ausgestaltete Kontaktelement 10 weist eine Bodenplatte 15 auf, von der die Greifmittel 12 abragen, wobei die Bodenplatte 15 mit der Endfläche 16 der Sammelschiene 8 verbunden ist. Die Bodenplatte 15 bildet hierbei für die weitere Sammelschiene 9 vorteilhaft einen Anschlag aus.

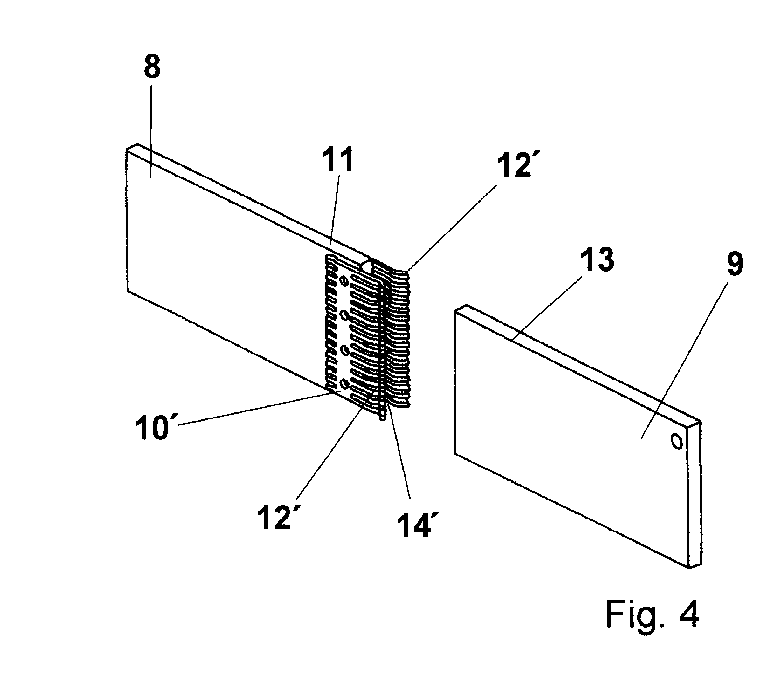

Fig. 4 zeigt eine perspektivische Ansicht zweier getrennter Sammelschienen 8, 9, wobei der Sammelschiene 8 als Kontaktelement 10' ein Leistungsschalterkontakt zugeordnet ist. Die Sammelschiene 8 gemäß Fig. 4 ist in einem nicht gezeigten Schaltschrank zur Aufnahme von elektrischen oder elektronischen Komponenten aufgenommen. Die Sammelschiene 8 ist stromführend, wobei der Sammelschiene 8 das Kontaktelement 10' zur Verbindung mit der weiteren stromführenden Sammelschiene 9 eines weiteren - ebenfalls nicht gezeigten - Schaltschranks zugeordnet ist. Das Kontaktelement 10' ragt von einem Längsende 11 der Sammelschiene 8 ab. Das Kontaktelement 10' weist Greifmittel 12' zum beidseitigen Umgreifen eines weiteren Längsendes 13 der weiteren Sammelschiene 9 auf. Die Greifmittel 12' erlauben eine einfache Steckverbindung der zwei Sammelschienen 8, 9.

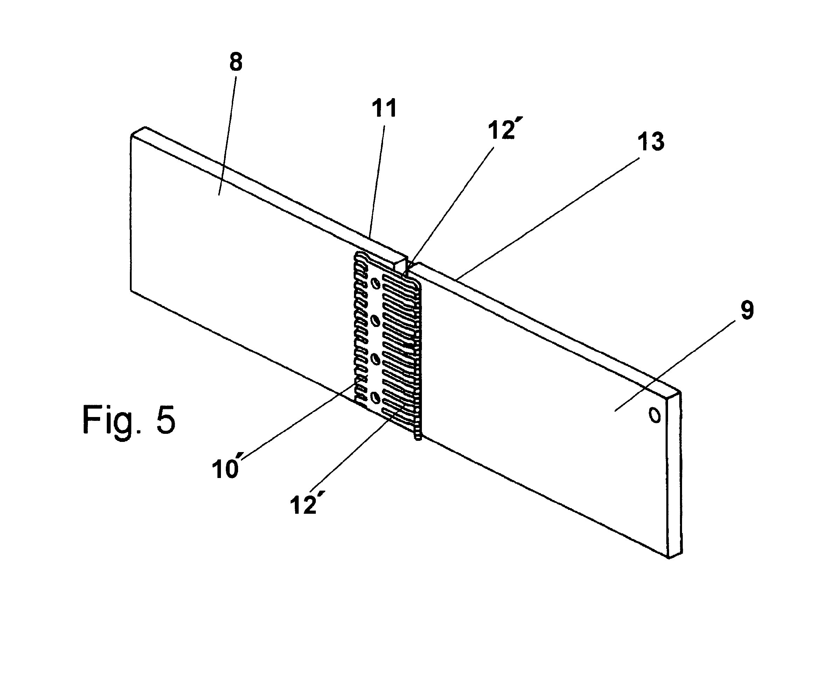

Die Greifmittel 12' sind als Gabelzungen ausgebildet und bilden einen Aufnahmeraum 14' aus, wobei sich mindestens zwei Gabelzungen zur Aufnahme des weiteren Längsendes 13 in dem Aufnahmeraum 14' gegenüberliegen. Durch diese konkrete Ausgestaltung kann das Längsende 13 der weiteren Sammelschiene 9 bis zu einem Anschlag in den Aufnahmeraum 14' eingeschoben werden, wie dies in Fig. 5 gezeigt ist. Konkret liegen 16 Gabelzungen an jeder Seitenfläche der Sammelschiene 9 an.

Die Greifmittel 12' sind derart geformt, dass sie den Aufnahmeraum 14' bereichsweise verjüngen. Durch diese konkrete Ausgestaltung liegen die Greifmittel 12' unter elastischer Spannung an den Seitenflächen der in den Aufnahmeraum 14' eingeschobenen weiteren Sammelschiene 9 an. Dies ist in Fig. 5 gezeigt. Die Greifmittel 12' weisen eine gekrümmte Form auf und sind bereichsweise gebogen. Die Krümmung oder Biegung erzeugt eine Verjüngung im Aufnahmeraum 14'. Beim Einschieben der weiteren Sammelschiene 9 werden die Greifmittel 12' im Bereich ihrer Krümmung oder Biegung elastisch deformiert und liegen daher unter mechanischer Spannung an der weiteren Sammelschiene 9 an. Die Greifmittel 12' sind zumindest bereichsweise parallel zur Längsachse der Sammelschiene 8 orientiert.

Die Greifmittel 12' des Leistungsschalterkontakts sind beidseitig auf den Seitenflächen der Sammelschiene 8 befestigt. Hierdurch ist eine verliersichere Verbindung des Leistungsschalterkontakts mit der Sammelschiene 8 gegeben.

Die Sammelschienen 8, 9 der Fig. 2 bis 5 sind als Hauptsammelschienen der zu verbindenden nicht gezeigten Schaltschränke ausgestaltet. Hierdurch sind die Schaltschränke vorteilhaft auf einfache Weise modulartig miteinander verbunden, indem nämlich allein deren Hauptsammelschienen stromführend und mechanisch miteinander verbunden sind.

Die in den Fig. 2 bis 5 nicht gezeigten Schaltschränke entsprechen bis auf die Ausführung ihrer Sammelschienen 8, 9 baulich den in Fig. 1 gezeigten Schaltschränken 1, 2.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

### Bezugszeichenliste

- 1, 2: Schaltschrank
- 3, 4: Sammelschiene des Stands der Technik
- 5: CU-Lasche
- 6, 7: Schraube
- 8: Sammelschiene
- 9: weitere Sammelschiene
- 10, 10': Kontaktelement
- 11: Längsende der Sammelschiene
- 12, 12': Greifmittel
- 13: Längsende der weiteren Sammelschiene
- 14, 14': Aufnahmeraum
- 15: Bodenplatte
- 16: Endfläche

## Patentansprüche

1. Schaltschrank zur Aufnahme von elektrischen oder elektronischen Komponenten, umfassend mindestens eine stromführende Sammelschiene (8), wobei der Sammelschiene (8) ein Kontaktelement (10, 10') zur Verbindung mit einer weiteren Sammelschiene (9) eines weiteren Schaltschranks zugeordnet ist und wobei das Kontaktelement (10, 10') von einem Längsende (11) der Sammelschiene (8) abragt, **dadurch gekennzeichnet, dass** das Kontaktelement (10, 10') Greifmittel (12, 12') zum beidseitigen Umgreifen eines weiteren Längsendes (13) der weiteren Sammelschiene (9) aufweist.

2. Schaltschrank nach Anspruch 1, **dadurch gekennzeichnet, dass** die Greifmittel (12, 12') als Gabelzungen ausgebildet sind und einen Aufnahmeraum (14, 14') ausbilden, wobei sich mindestens zwei Gabelzungen zur Aufnahme des weiteren Längsendes (13) in dem Aufnahmeraum (14, 14') gegenüberliegen.

3. Schaltschrank nach Anspruch 1 oder 2, **dadurch gekennzeichnet, dass** die Greifmittel (12, 12') derart geformt sind, dass sie einen Aufnahmeraum (14, 14') für das weitere Längsende (13) der weiteren Sammelschiene (9) bereichsweise verjüngen.

4. Schaltschrank nach einem der Ansprüche 1 bis 3, **dadurch gekennzeichnet, dass** die Greifmittel (12, 12') zumindest bereichsweise parallel zur Längsachse der Sammelschiene (8) orientiert sind.

5. Schaltschrank nach einem der Ansprüche 1 bis 4, **dadurch gekennzeichnet, dass** mindestens ein Kontaktelement (10) als Lyrakontakt ausgestaltet ist.

6. Schaltschrank nach Anspruch 5, **dadurch gekennzeichnet, dass** der Lyrakontakt eine Bodenplatte (15) aufweist, von der die Greifmittel (12) abragen, wobei die Bodenplatte (12) mit der Endfläche (16) der Sammelschiene (8) verbunden ist.

7. Schaltschrank nach einem der Ansprüche 1 bis 6, **dadurch gekennzeichnet, dass** mindestens ein Kontaktelement (10') als Leistungsschalterkontakt ausgestaltet ist.

8. Schaltschrank nach Anspruch 7, **dadurch gekennzeichnet, dass** die Greifmittel (12') des Leistungsschalterkontakts auf den Seitenflächen der Sammelschiene (8) befestigt sind.

9. Schaltschrank nach einem der Ansprüche 1 bis 8, **dadurch gekennzeichnet, dass** die Sammelschiene (8) als Hauptsammelschiene ausgestaltet ist.

10. Anordnung, umfassend einen Schaltschrank nach einem der voranstehenden Ansprüche und einen weiteren Schaltschrank, wobei deren Sammelschienen (8, 9) durch ein Kontaktelement (10, 10') miteinander stromführend verbunden sind.

11. Sammelschiene (8) zur Verwendung in einem Schaltschrank nach einem der Ansprüche 1 bis 9, umfassend ein Kontaktelement (10, 10') zur Verbindung mit einer weiteren Sammelschiene (9), **dadurch gekennzeichnet, dass** das Kontaktelement (10, 10') Greifmittel (12, 12') zum beidseitigen Umgreifen eines Längsendes (13) der weiteren Sammelschiene (9) aufweist.
